# EUROPÄISCHE PATENTSCHRIFT

(11) **EP 0 350 625 B1**
(45) Veröffentlichungstag und Bekanntmachung des Hinweises auf die Patenterteilung: **07.01.1993**
(21) Anmeldenummer: 89110525.6
(22) Anmeldetag: 17.06.1989
(51) Int. Cl.: C01G 49/08, C09C 1/24

(54) **Eisenoxidpigmente, Verfahren zu ihrer Herstellung sowie deren Verwendung**
Ion oxide pigments, process for their preparation and their use
Pigments d'oxyde de fer, procédé pour leur préparation et leur utilisation

(30) Priorität: 24.06.1988 DE 3821342
(43) Veröffentlichungstag der Anmeldung: 17.01.1990
(73) Patentinhaber: BAYER AG, 51368 Leverkusen (DE)
(72) Erfinder: Wiese, Jürgen, Dr., D-4150 Krefeld (DE); Westerhaus, Axel, Dr., D-4150 Krefeld (DE); Scharschmidt, Jürgen, Dr., D-4150 Krefeld (DE); Buxbaum, Gunter, Dr., D-4150 Krefeld (DE)

(56) Entgegenhaltungen:
- FR-A- 2 261 981
- FR-A- 2 368 449
- CHEMICAL ABSTRACTS, Band 99, Nr. 26, Dezember 1983, Seite 141, Abstract Nr. 214873e, Columbus, Ohio, US; K. MATSUDA: "Formation process of magnetite by reaction between iron(III) hydroxide oxide and iron(II) sulfate", NIPPON KAGAKU KAISHI 1983, (11), 1589-92

## Beschreibung

Die vorliegende Erfindung betrifft neuartige Eisenoxid-Pigmente, Verfahren zu ihrer Herstellung sowie deren Verwendung.

Pigmente auf der Basis von Magnetit (Fe₃O₄) mit Teilchengrößen im Bereich von 0,1 bis 2,0 µm haben eine breite Anwendung gefunden. Als schwarze Farbpigmente dienen sie zur Einfärbung von Baustoffen und Lacken. Ihre magnetischen Eigenschaften werden bei Einkomponententonern für Fotokopierer genutzt. Um optimale Eigenschaften aufzuweisen, werden allgemein Pigmente mit möglichst enger Teilchengrößenverteilung benötigt. Solche Pigmente haben hervorragende Farbeigenschaften bzw. die von Tonerherstellern gewünschten magnetischen Eigenschaften wie hohe Sättigung und niedrige Koerzitivfeldstärke.

Die Herstellung solcher Pigmente ist daher ein wichtiges Entwicklungsziel. Die Verfahren, mit denen solche Pigmente herstellbar sind, sind hinreichend beschrieben.

So wird in der DE-A 900 257 das sogenannte Fällverfahren beschrieben, bei dem Eisen-II-salze in Gegenwart von Alkalien mit Luftsauerstoff zu Fe₃O₄-Pigmenten umgesetzt werden.

Eine andere Variante bietet das Zweistufenfällverfahren. Dabei wird, wie in der US-A 2 631 085 ausgeführt, ein Eisen-III-oxid, bzw. Eisen-III-hydroxid mit Eisen-II-salzen unter Zugabe von Alkalien zu Magnetit-Pigmenten umgesetzt.

Gemäß diesem Verfahren sind Fe₃O₄-Pigmente mit sehr guten Farbeigenschaften und den gewünschten Magnetwerten herstellbar. Solche Pigmente zeichnen sich auch durch eine enge Teilchengrößen-Verteilung aus. Aus diesen Pigmenten können unter geeigneten Oxidationsbedingungen unter Formerhalt entsprechende γ-Fe₂O₃-Pigmente, bertholoide Verbindungen bzw. Eisenoxidrotpigmente (α-Fe ₂O₃) erhalten werden.

Der Magnetit kristallisiert im kubischen System mit Spinellstruktur im Strukturtyp Oₕ7. Die Ausbildung der Kristallflächen (100) führt zu würfelförmigen Kristallen, die (111)-Kristallflächen zu den octaedrischen Formen, wie sie bislang bei den Magnetitpigmenten beobachtet wurden. Bei unregelmäßig geformten Pigmentteilchen kommt es nicht zu der Ausbildung einer definierten Kristallfläche.

In den obengenannten Patentschriften wird die Kristallform als würfelförmig, octaedrisch oder unregelmäßig beschrieben. Diese Pigmente weisen aufgrund ihrer Geometrie ein erreichbares Oberflächen/Volumen-Verhältnis von >1,18 auf.

Beim Einsatz der Pigmente zur Einfärbung von Lacken ist letztendlich der spezifische Bindemittelbedarf abhängig vom Oberflächen-Volumenverhältnis. Kleinere Verhältnisse werden grundsätzlich angestrebt.

Aufgabe dieser Erfindung ist es, Eisenoxid-Pigmente zur Verfügung zu stellen, die bei gegebener Teilchengröße ein geringeres Oberflächen/Volumenverhältnis aufweisen als die aus dem Stand der Technik bekannten.

Überraschenderweise wurde nun gefunden, daß Eisenoxide in Pigmentqualität auch in Form von Rhombendodekaedern erhalten werden können. Gegenstand dieser Erfindung sind somit Eisenoxid-Pigmente mit rhombendodekaedrischer Form und einem mittleren Teilchendurchmesser von 0,05 bis 3,0 µm bei einer Standardabweichung der Teilchengrößenverteilung von ±30 %. Besonders bevorzugt sind solche Eisenoxid-Pigmente, die einen mittleren Teilchendurchmesser von 0,1 bis 2,0 µm aufweisen. Weiterhin sind die erfindungsgemäßen Eisenoxidpigmente dadurch gekennzeichnet, daß sie Magnetitpigmente mit einer Ausbildung der (110)-Kristallflächen sind.

Die Rhombendodekaeder-Form war bislang lediglich von natürlichem mineralischem Magnetit oder bei größeren aus der Schmelze gezogenen Einkristallen bekannt, nicht jedoch bei synthetischen Eisenoxidpigment. Zur Modifizierung ihrer Farb- oder Magneteigenschaften können die erfindungsgemäßen Eisenoxid-Pigmente vorteilhaft 2-und 3-wertige Kationen aus der Gruppe Zn, Mn, Ni, Co, Ca, Al, Cr, Ti, V, Ga in Mengen von 0,1 bis 10 Gew.-% aufweisen.

Feinteilige Pigmente benötigen entsprechend ihrer spezifischen Oberfläche und Teilchengeometrie unterschiedliche Mengen an Dispergier- und Bindemitteln bei der Verarbeitung. Der niedrigste spezifische Bedarf ist zu erwarten bei möglichst kugelförmigen Teilchen, d.h. kleinster Oberfläche bezogen auf das Volumen. Der Rhombendodekaeder zeigt verglichen mit Würfel und Octaeder die beste Annäherung an die Kugelform. So beträgt bei einem Oberflächen/Volumen-Verhältnis von 1 das entsprechende Verhältnis beim Rhombendodekaeder 1.11, beim Octaeder 1,18 und beim Würfel 1,24.

Diese Erfindung betrifft auch Verfahren zur Herstellung der erfindungsgemäßen Eisenoxid-Pigmente. So gelingt die Herstellung von feinteiligen Fe₃O₄-Pigmenten mit rhombendodekaedrischer Form mit der gewünschten engen Teilchengrößenverteilung nach dem sogenannten Zweistufenfällverfahren unter den in folgenden Reaktionsbedingungen. Wesentlich ist der in der Suspension mit einer Glaselektrode gemessene pH-Wert, der bei der Umsetzung des Eisenoxid-Hydroxids mit Eisen-II-salzen vorliegt. Wird dieser pH-Wert während der gesamten Reaktionszeit im Bereich von 5,8 bis 6,2 gehalten, was durch Dosierung mit Alkalien erreicht wird, so entstehen feinteilige Eisenoxidschwarz-Pigmente mit rhombendodekaedrischer Teilchenform. Bereits bei einem pH-Wert von 7,0 wird ausschließlich der Magnetit mit würfelförmigem Kristallhabitus beobachtet. Gegenstand der Erfindung ist somit ein Verfahren zur Herstellung der erfindungsgemäßen Eisenoxid-Pigmente, welches dadurch gekennzeichnet ist, daß Eisen-II-salze mit Eisen-III-oxidhydroxid-Verbindungen unter Zusatz von Alkalihydroxid so umgesetzt werden, daß ein Suspensions-pH-Wert von 5,8 bis 6,2 während der gesamten Reaktionszeit bei einer Reaktionstemperatur von 50 bis 100°C, bevorzugt von 80 bis 95°C, eingehalten wird.

Es ist aber auch möglich, anstelle von Alkalihydroxidlösungen Alkalicarbonatlösungen einzusetzen. Hierbei werden dann in Abhängigkeit von der Fälltemperatur auch die erfindungsgemäßen Eisenoxid-Pigmente erhalten. Dabei ist es notwendig, die Temperatur der Eisenoxid-Hydroxid-Suspension bei der Fällung unterhalb 80° C zu halten. Bei Temperaturen oberhalb 80° C kommt es bereits zu der Bildung würfelförmiger Pigmente mit abgeschrägten Kanten. Eine weitere bevorzugte Durchführungsform des erfindungsgemäßen Verfahrens besteht somit darin, daß Eisen-II-salze mit Eisen-III-oxid-hydroxid-Verbindungen umgesetzt werden und eine Fällung mit Alkalicarbonat bei Temperaturen unterhalb 80° C durchgeführt wird. Besonders bevorzugt wird dabei die Zugabe der Alkalicarbonate bei Temperaturen unterhalb 80° erfolgen und die weitere Umsetzung bei 80 bis 95° C durchgeführt.

Beide erfindungsgemäßen Verfahrensvarianten erlauben die Herstellung der erfindungsgemäßen Magnetite mit enger Teilchengrößenverteilung. Dabei liefert das Verfahren der exakten pH-Führung bevorzugt Pigmente mit einem Teilchendurchmesser von 0,1 bis 0,5 µm. Bei der Anwendung des Carbonat-Fällungsverfahrens bei definierter Temperatur werden vorwiegend Magnetitpigmente mit einer Teilchengröße von 0,5 bis 2,0 µm erhalten.

Die erfindungsgemäßen Pigmente lassen sich unter Formerhalt bei Temperaturen zwischen 200 und 400° C je nach Oxidationsbedingungen zum γ-Fe₂O₃ oder zu bertholoiden Systemen oxidieren. Wird die Oxidation bei höheren Temperaturen ausgeführt, gelangt man zu rhombendodekaedrischen α-Fe₂O₃-Pigmenten.

Aufgrund ihrer beschriebenen Eigenschaften sind die erfindungsgemäßen Eisenoxid-Pigmente hervorragend zur Herstellung von Druckfarben und magnetischen Tonern geeignet. Ebenso können sie für die Herstellung von Fritten oder Schleifmitteln eingesetzt werden. Gegenstand der Erfindung ist somit die Verwendung der erfindungsgemäßen Eisenoxid-Pigmente zur Herstellung von Druckfarben, von magnetischen Tonern, von Fritten oder Schleifmitteln.

Im folgenden wird die Erfindung beispielhaft erläutert, ohne sie jedoch dadurch einzuschränken. Insbesondere kann der Fachmann ohne Schwierigkeit durch Modifizierung der anderen bekannten Verfahren zur Herstellung von Eisenoxid-Pigmenten im Rahmen der angegebenen Reaktionsbedingungen von pH, Fällmittel und Temperatur weitere Abwandlungen des erfindungsgemäßen Verfahrens finden.

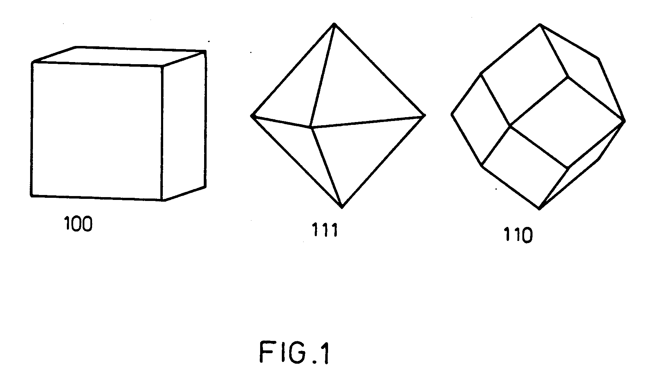

Zur weiteren Erläuterung sind in Fig. 1 schematisch die Kristalltypen Würfen (100), Octaeder (111) und Rhombendodekaeder (110) aufgeschrieben.

### Vergleichsbeispiel 1

15 l einer Suspension von α-FeOOH (40 g/l) in einer wäßrigen FeSO₄-Lösung (48 g/l) mit einem Fe^{III} : Fe^{II}-Verhältnis von 1,4 werden in einem 30-l-Rührkessel unter Inertbedingungen (N₂) und Rühren (1600 U/min) mit ca. 1,8 l Natronlauge (150 g/l) auf pH 7,0 eingestellt. Es wird 30 Minuten homogenisiert, dann in 30 Minuten auf 80° C geheizt, wobei der pH-Wert bei 7,0 konstant gehalten wird.

Die Reaktionszeit beträgt 1,5 Stunden.

Anschließend wird bei geöffneter Apparatur eine Stunde ohne N₂ nachgerührt.

Es ergibt sich ein NaOH-Verbrauch von 2,6 l (entspr. 103 % d.Th.).

Nach Filtration und Waschen erfolgt die Trocknung bei 40° C.

Der erhaltene Magnetit ist würfelförmig.

| | |
|---|---|
| Teilchengröße | 0,3 µm |
| spez. Oberfläche | 4,2 m²/g |
| Koerzitivfeldstärke | 63 Oe = 5,01 kA/m |

### Vergleichsbeispiel 2

15 l einer Suspension von α-FeOOH (65 g/l) in einer wäßrigen FeSO₄-Lösung (57 g/l) mit einem Fe^{III} : Fe^{II}-Verhältnis von 1,95 werden in einem 30-l-Rührkessel unter Inertbedingungen (N₂) und Rühren (1600 U/min) auf 90° C erhitzt und in 10 Minuten mit der zur Fällung nötigen Na₂CO₃-Menge (3,0 l; 200 g/l) versetzt. Anschließend wird 5 Stunden gerührt, danach wird der pH-Wert mit Natronlauge (400 g/l) auf pH 9,5 gestellt und weitere 4 Stunden gerührt. Der NaOH-Verbrauch beträgt 450 ml. Bei geöffneter Apparatur wird eine Stunde ohne N₂ nachgerührt.

Nach Filtration und Waschen erfolgt die Trocknung bei 40° C.

Der erhaltene Magnetit ist würfelförmig mit abgeschrägten Kanten.

| | |
|---|---|
| Teilchengröße | 1,5 µm |
| spez. Oberfläche | 1,9 m²/g |
| Koerzitivfeldstärke | 43 Oe = 3,42 kA/m |

### Vergleichsbeispiel 3

15 l einer Suspension von α-FeOOH (45 g/l) in einer wäßrigen FeSO₄-Lösung (41 g/l) mit einem Fe^{III} : Fe^{II}-Verhältnis von 1,9 werden in einem 30-l-Rührkessel unter Inertbedingungen (N₂) und Rühren (1600 U/min) auf 70° C erhitzt und in 8 Minuten mit der zur Fällung benötigten Menge einer Mischung aus Na₂CO₃ (1075 ml; 200 g/l) und NaOH (810 ml; 200 g/l) als wäßrige Lösung versetzt.

Anschließend wird in 60 Minuten auf 90° C erhitzt und 4 Stunden gerührt.

Bei geöffneter Apparatur wird eine Stunde ohne N₂ nachgerührt.

Nach Filtration und Waschen erfolgt die Trocknung bei 40° C.

Der erhaltene Magnetit zeigt eine Übergangsform zwischen Würfel und Rhombendodekaeder.

| | |
|---|---|
| Teilchengröße | 0,3 µm |
| spez. Oberfläche | 4,9 m²/g |
| Koerzitivfeldstärke | 77 Oe = 6,13 kA/m |

### Beispiel 1

15 l einer Suspension von α-FeOOH (31 g/l) in einer wäßrigen FeSO₄-Lösung (32 g/l) mit einem Fe^{III} : Fe^{II}-Verhältnis von 1,7 werden in einem 30-l-Rührkessel unter Inertbedingungen (N₂) und Rühren (1600 U/min) auf 95° C erhitzt. Der pH-Wert der Suspension wird durch Zugabe von Natronlauge (90 g/l) auf pH 6,0 eingestellt. Während der Reaktion wird durch Zufügen weiterer Natronlauge der pH-Wert auf 6,0 konstant gehalten.

Die Reaktionszeit beträgt 5,5 Stunden.

Anschließend wird bei geöffneter Apparatur ohne N₂ eine Stunde nachgerührt. Es ergibt sich ein NaOH-Verbrauch von 3,03 l (entspr. 108 % d.Th.).

Nach Filtrieren und Waschen erfolgt die Trocknung bei 40° C.

Der erhaltene Magnetit ist rhombendodekaedrisch.

| | |
|---|---|
| Teilchengröße | 0,4 µm |
| spez. Oberfläche | 3,6 m²/g |
| Koerzitivfeldstärke | 36 Oe = 2,86 kA/m |

### Beispiel 2

15 l einer Suspension von α-FeOOH (58 g/l) in einer wäßrigen FeSO₄-Lösung (50 g/l) mit einem Fe^{III} : Fe^{II}-Verhältnis von 2,0 werden in einem 30-l-Rührkessel unter Inertbedingungen (N₂) und Rühren (1600 U/min) auf 70° C erhitzt und in 10 Minuten mit 2,62 l Natriumcarbonatlösung (200 g/l) versetzt.

Anschließend wird in 60 Minuten auf 90° C erhitzt und weitere 4 Stunden gerührt.

Danach wird der pH-Wert mit ca. 790 ml Natronlauge (200 g/l) auf pH 9,5 gestellt und weitere 4 Stunden gerührt.

Bei geöffneter Apparatur wird eine Stunde ohne N₂ nachgerührt.

Nach Filtration und Waschen erfolgt die Trocknung bei 40° C.

Der erhaltene Magnetit ist rhombendodekaedrisch.

| | |
|---|---|
| Teilchengröße | 1,5 µm |
| spez. Oberfläche | 2,1 m²/g |
| Koerzitivfeldstärke | 48 Oe = 3,82 kA/m |

## Patentansprüche

1. Eisenoxid-Pigmente mit rhombendodekaedrischer Form und einem mittleren Teilchendurchmesser von 0,05 bis 3,0 µm bei einer Standardabweichung der Teilchengrößenverteilung von ±30 %.

2. Eisenoxid-Pigmente gemäß Anspruch 1, dadurch gekennzeichnet, daß sie einen mittleren Teilchendurchmesser von 0,1 bis 2,0 µm aufweisen.

3. Eisenoxid-Pigmente gemäß einem der Ansprüche 1 oder 2, dadurch gekennzeichnet, daß sie Magnetitpigmente mit einer Ausbildung der (110)-Kristallflächen sind.

4. Eisenoxid-Pigmente gemäß Anspruch 3, dadurch gekennzeichnet, daß sie zwei- und dreiwertige Kationen ausder Gruppe Zn, Mn, Ni, Co, Ca, Al, Cr, Ti, V, Ga in Mengen von 0,1 bis 10 Gew.-% aufweisen.

5. Verfahren zur Herstellung der Eisenoxid-Pigmente gemäß einem oder mehreren der Ansprüche 1 bis 4, dadurch gekennzeichnet, daß Eisen-II-salze mit Eisen-III-oxid-hydroxid-Verbindungen unter Zusatz von Alkalihydroxid so umgesetzt werden, daß ein Suspensions-pH-Wert von 5,8 bis 6,2 während der gesamten Reaktionszeit bei einer Reaktionstemperatur von 50 bis 100°C, bevorzugt von 80 bis 95°C, eingehalten wird.

6. Verfahren zur Herstellung der Eisenoxidpigmente gemäß einem oder mehreren der Ansprüche 1 bis 4, dadurch gekennzeichnet, daß Eisen-II-salze mit Eisen-III-oxid-hydroxid-Verbindungen umgesetzt werden und eine Fällung mit Alkalicarbonat bei Temperaturen unterhalb 80°C durchgeführt wird.

7. Verfahren gemäß Anspruch 6, dadurch gekennzeichnet, daß die Zugabe der Alkalicarbonate bei Temperaturen unterhalb 80°C erfolgt und die weitere Umsetzung bei 80 bis 95°C durchgeführt wird.

8. Verwendung der Eisenoxid-Pigmente gemäß einem oder mehreren der Ansprüche 1 bis 4 zur Herstellung von Druckfarben, von magnetischen Tonern.

9. Verwendung der Eisenoxid-Pigmente gemäß einem oder mehreren der Ansprüche 1 bis 4 zur Herstellung von Fritten oder Schleifmitteln.

## Claims

1. Rhombododecahedral iron oxide pigments having an average particle diameter of 0.05 to 3.0 µm for a standard deviation of the particle size distribution of ±30%.

2. Iron oxide pigments as claimed in claim 1, characterized in that they have an average particle diameter of 0.1 to 2.0 µm.

3. Iron oxide pigments as claimed in claim 1 or 2, characterized in that they are magnetite pigments with developed (110) crystal faces.

4. Iron oxide pigments as claimed in claim 3, characterized in that they contain divalent and trivalent cations from the group consisting of Zn, Mn, Ni, Co, Ca, Al, Cr, Ti, V, Ga in quantities of 0.1 to 10% by weight.

5. A process for the production of the iron oxide pigments claimed in one or more of claims 1 to 4, characterized in that iron(II) salts are reacted with iron(III) oxide hydroxide compounds in the presence of alkali metal hydroxide so that a suspension pH value of 5.8 to 6.2 is maintained throughout the reaction at a reaction temperature of 50 to 100°C and preferably 80 to 95°C.

6. A process for the production of the iron oxide pigments claimed in one or more of claims 1 to 4, characterized in that iron(II) salts are reacted with iron(III) oxide hydroxide compounds and precipitation with alkali metal carbonate is carried out at temperatures below 80°C.

7. A process as claimed in claim 6, characterized in that the alkali metal carbonates are added at temperatures below 80°C and the subsequent reaction is carried out at 80 to 95°C.

8. The use of the iron oxide pigments claimed in one or more of claims 1 to 4 for the production of printing inks and magnetic toners.

9. The use of the iron oxide pigments claimed in one or more of claims 1 to 4 for the production of frits or abrasives.

## Revendications

1. Pigments d'oxyde de fer de forme dodécaédrique rhomboïdale, ayant un diamètre moyen des particules de 0,05 à 3,0 µm pour un écart type de la répartition des diamètres de particules de ± 30 %.

2. Pigments d'oxyde de fer suivant la revendication 1, caractérisés en ce qu'ils présentent un diamètre moyen des particules de 0,1 à 2,0 µm.

3. Pigments d'oxyde de fer suivant l'une des revendications 1 et 2, caractérisés en ce qu'ils sont des pigments de magnétite avec une configuration des plans cristallographiques (110).

4. Pigments d'oxyde de fer suivant la revendication 3, caractérisés en ce qu'ils présentent des cations divalents et trivalents du groupe Zn, Mn, Ni, Co, Ca, Al, Cr, Ti, V, Ga, en quantités de 0,1 à 10 % en poids.

5. Procédé de production des pigments d'oxyde de fer suivant une ou plusieurs des revendications 1 à 4, caractérisé en ce qu'on fait réagir des sels de fer-II avec des composés d'oxyde-hydroxyde de fer-III avec addition d'un hydroxyde alcalin de manière à maintenir une valeur du pH de la suspension de 5,8 à 6,2 pendant toute la durée de la réaction, à une température de réaction de 50 à 100°C, de préférence de 80 à 95°C.

6. Procédé de production des pigments d'oxyde de fer suivant une ou plusieurs des revendications 1 à 4, caractérisé en ce qu'on fait réagir des sels de fer-II avec des composés d'oxyde-hydroxyde de fer-III, et on effectue une précipitation avec un carbonate alcalin à des températures en dessous de 80°C.

7. Procédé suivant la revendication 6, caractérisé en ce qu'on effectue l'addition des carbonates alcalins à des températures en dessous de 80°C, et on poursuit la réaction à 80-95°C.

8. Utilisation des pigments d'oxyde de fer suivant une ou plusieurs des revendications 1 à 4 pour la production d'encres d'impression, de toners magnétiques.

9. Utilisation des pigments d'oxyde de fer suivant une ou plusieurs des revendications 1 à 4 pour la production de frittes ou d'abrasifs.
